# EUROPEAN PATENT APPLICATION

(11) **EP 1 868 274 A1**
(43) Date of publication of application: **19.12.2007**
(21) Application number: 07708038.0
(22) Date of filing: 05.02.2007
(51) Int. Cl.: H02H 7/18, H01M 10/44, H02J 7/00

(54) **BATTERY PACK, AND BATTERY PROTECTING METHOD**

(30) Priority: 27.02.2006 JP 2006051274
(71) Applicant: Sony Corporation, Minato-ku Tokyo 108-0075 (JP)
(72) Inventor: NAKASHIMA, Ryoichi, Tokyo 108-0075 (JP); KUMADA, Masashi, Tokyo 141-0022 (JP); SATO, Hideyuki, Tokyo 108-0075 (JP); HARADA, Yoshio, Tokyo 108-0075 (JP); KANEKO, Michihiro, Tokyo 108-0075 (JP); SUZUKI, Kentaro, Tokyo 108-0075 (JP)
(74) Representative: DeVile, Jonathan Mark
(86) International application number: PCT/JP2007/051920
(87) International publication number: WO 2007/097181

(57) **Abstract**

A battery protection operation having higher safety is performed in a battery pack. Presence/absence of plural abnormal states including at least an overcharge state and an overdischarge state based on detected results of voltage between a positive terminal and a negative terminal of a battery cell as well as an overcurrent charge state and an overcurrent discharge state indicating that charge current and discharge current are excessive respectively based on detected results of charge and discharge current of the battery cell are determined at any time and an abnormality determination flag showing a determination result of respective abnormal states as a flag is stored. In addition, control states A to D according to combinations of respective operation states of the a discharge current shut-off circuit selectively shutting off discharge current of the battery cell and a charge current shut-off circuit selectively shutting off charge current of the battery cell are defined, and to which control state the state should be changed will be determined based on a value of the abnormality determination flag.

## Description

### Technical Field

The invention related to a battery pack in which a processing circuit executing protection processing for occurrence of abnormality of a secondary battery is housed with the secondary battery, and a battery protection method for protecting the secondary battery.

### Background Art

In recent years, portable electronic apparatuses such as a digital video camera are increasing, and performance of secondary batteries mounted on these electronic apparatuses is regarded as important. As one of such secondary batteries, there is one called a lithium-ion type.

In portable electronic apparatuses using the secondary batteries as power supply, there are many ones that a battery remaining amount display function is installed. Particularly, a lithium-ion secondary battery has a characteristic that battery cell voltage decreases slowly and linearly except a period just after the start of discharge and a period just before the completion of discharge, therefore, the battery remaining amount can be predicted relatively accurately and can be displayed. To predict the remaining amount more accurately, it is preferable to detect integrated values of charge and discharge current, temperature of the battery cell and the like in addition to the detection of the battery cell voltage. A battery pack in which a circuit such as a microcomputer to perform such detection or calculation is housed with the lithium-ion type battery cell in the same package is commercially available, in which the function of accurate remaining amount display is realized by reading out the detection/calculation information of the battery pack.

In the lithium-ion secondary battery, it is known that lithium ion becomes metal lithium and is precipitated at an anode especially at the time of overcharge, and smoke or fire may occur from the battery or the battery is exploded at the worst case. At the time of overdischarge, it is also known that small short-circuit or capacity loss occurs inside the battery at the time of overdischarge, and abnormal heat generation occurs by overcurrent flowing when a cathode and an anode are short circuited. Accordingly, the lithium-ion secondary battery is usually provided with a protection function monitoring these abnormal states and a switch for avoiding the abnormal states in order to prevent overcharge, overdischarge and short-circuit (over current).

Specifically; the switch is realized as two FETs (Field Effect Transistors) in which propriety of charging and discharging of the battery cell can be controlled respectively. The operations of these FETs are controlled by a control circuit such as a microcontroller according to detected values of voltage at both ends of the battery cell or current. The control circuit and the FETs for protection operations are also housed in the battery pack with the battery cell.

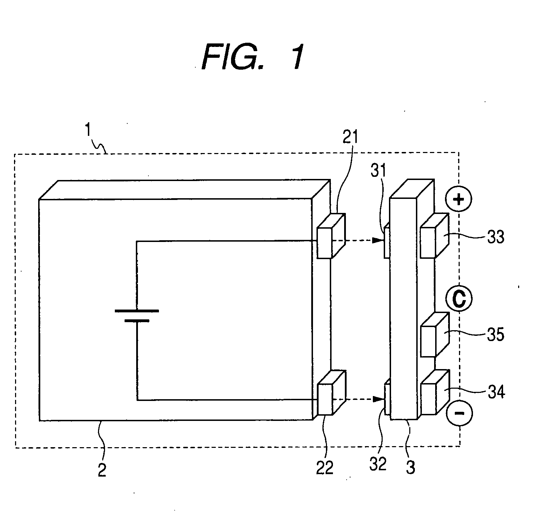

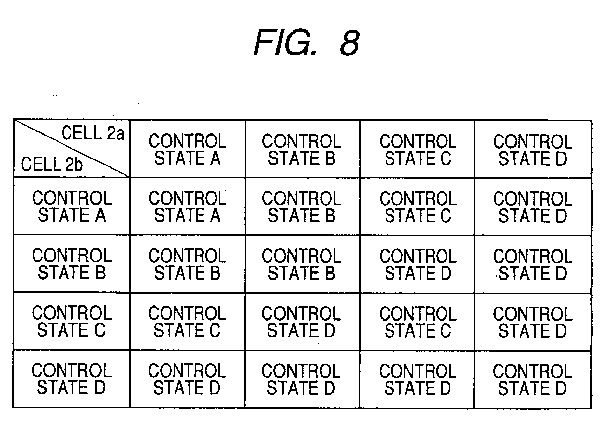

As a conventional battery pack having the above function, there was one in which the protection function of the battery cell is realized by a circuit including a dedicated voltage comparator as a main component (for example, refer to Japanese Patent 31336677, paragraph number [0011] to [0016], Fig. 1). In addition, in order to realize the protection function chiefly by software control, there was a battery pack in which plural control states indicating charge states and discharge states of the battery cell are defined in advance and these control states are determined based on detected values of voltage at both ends of the battery cell and discharge current, then, operations of protection FETs are controlled according to the control states (for example, JP-A-2005-151696, paragraph number [0084] to [0101], Fig. 8).

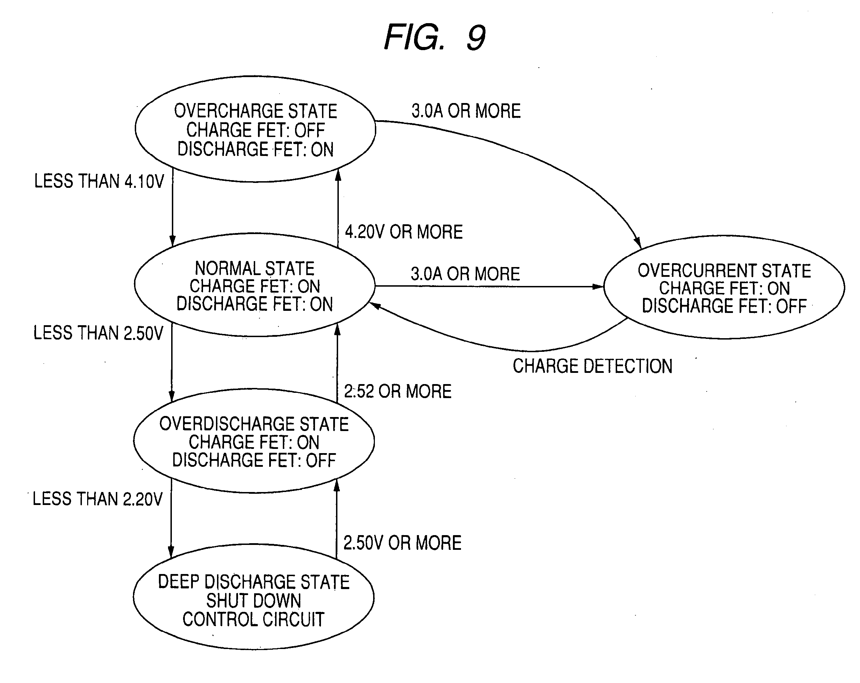

Fig. 9 is a view showing transition examples of control states in the conventional battery pack.

In the battery back disclosed in the JP-A-2005-151696, five control states which are an overcharge state, a normal state, an overdischarge state, a deep discharge state and an overcurrent state are defined as shown in Fig. 9, and the operations of a FET for charge control and a FET for discharge control (denoted as a charge FET and a discharge FET respectively in the drawing) are determined in each control state. In the FET for charge control and the FET for discharge control, charge current and discharge current are shut off by turning off the FETs.

The transitions among the overcharge state, the normal state, the overdischarge state and the deep discharge state are controlled based on the detected results of the battery cell voltage. In the normal state, both FETs for charge control and for discharge control are turned on, and charging from a charger as well as discharging, namely, power supply to the apparatus are possible. When the battery cell voltage becomes more than a certain value (in this case, 4.20V or more), the normal state makes a transition to the overcharge state, and the FET for charge control is turned off to prevent occurrence of abnormality due to overcharge. When the battery cell voltage decreases to less than a certain value (in this case, less than 4.10V) after that, the state returns to the normal state.

When the battery cell voltage further decreases less than a certain value (in this case, less than 2.50V), the normal state makes a transition to the disovercharge state, and the FET for discharge control is turned off, which disables power supply to the apparatus. In the overdischarge state, when the battery cell voltage increases to a certain value (in this case, 2.52V or more), the state returns to the normal state, which enables power supply again. However, when the battery cell voltage further decreases to less than a certain value (in this case, less than 2.20V), the over discharge state makes a transition to the deep discharge state. In the deep discharge state, the control circuit for protection operation is not able to be operated due to the voltage decrease, and the control circuit is shut down. When the charging is started and the battery cell voltage increases to a certain value (in this case, 2.50V or more), the operation of the control circuit is started and the state makes a transition to the overdischarge state.

In the conventional battery pack, not only the battery cell voltage but also discharge current of the battery cell is detected, which prevents abnormality occurrence such as heat generation caused by excessive current flowing due to short circuit between positive and negative terminals. In Fig. 9, in the normal state and the overcharge state in which the FET for discharge control is on, when the discharge current becomes more than a certain value (in this case, 3.0A or more), the state makes a transition to an overcurrent state, and the FET for discharge control is turned off. In this state, when the FET for charge control is turned on and the start of charging is detected by the voltage detection at a charge terminal and the like, the state makes a transition to the normal state.

In the overcurrent state, a method of returning by detecting that discharge load is released can be considered, however, there is a case that a situation occurs, in which the overcurrent state and the normal state are repeated by contact/non-contact between metal such as a key and an electrode being repeated, therefore, the return is performed by the charge detection in order to avoid the above situation.

As described above, chiefly in the case that overcharge or overcurrent occurred, abnormality occurrence at the battery cell was prevented by allowing the control state to be changed according to the detected values of the battery cell voltage and discharge current.

Recently, it is desired that battery protection processing which has further higher safety is performed, assuming that various situations according to the battery cell voltage or current. However, the above conventional battery cell protection method is insufficient for dealing with all abnormal states accurately.

For example, in the conventional protection method of the battery cell, there is a problem that it is not always possible to perform appropriate control processing such as in the case that plural abnormalities occur. As an example, in the case that abnormalities of overcharge and overcurrent occur simultaneously from the normal state, there is a possibility that it is not possible to determine that the state should be changed to which control state in either the overcharge state or the overcurrent state, and it is not possible to perform appropriate on/off operation of the FETs, as a result, it is not possible to prevent either the charge voltage or discharge current from being excessive. In order to avoid the situation, it is desired that control states and state transition conditions according to the battery cell voltage and discharge current are defined more accurately and clearly, however, there is a problem that control processing will be complicated as these are defined accurately.

Also there is a problem that it is not possible to determine that transition is whether from the normal state or from the overcharge state when the state makes a transition to the overcurrent state. There is a case, for example, that battery cell voltage at the time of return from the overcurrent state differs according to the transition from which state, therefore, a case in which control becomes unnatural is conceivable, such that it is necessary to change the control state again according to the battery cell voltage at that time, if the overcharge state is allowed to return to the normal state uniquely. There is also a problem that analysis of abnormality occurrence is not easy because it is not possible to immediately know from which state the state has been changed to the overcurrent state.

It is further desired to detect that not only discharge current but also charge current becomes excessive and to execute protection operation according to the detection. There is a problem that it is necessary to define the control states or state transition conditions further accurately for the above purpose and that the control processing will be complicated.

In a battery pack in which two or more battery cells are housed, it is conceivable that a case in which abnormalities which are different according to the battery cells, however, state transition considering such case is not assumed, and there is a problem that appropriate protection operation is not always executed.

The invention has been made in view of the above problems, and an object thereof is to provide a battery pack in which battery protection operation having further higher safety.

Another object of the invention is to provide a battery protection method which is capable of executing battery protection operation having further higher safety.

### Disclosure of the Invention

In order to solve the above problems, in a battery pack in which a processing circuit executing protection processing for abnormality occurrence of a secondary battery is housed with the secondary battery, there is provided a battery pack including a discharge current shut-off circuit selectively shutting off discharge current of the secondary battery, a charge current shut-off circuit selectively shutting off charge current of the secondary battery, a voltage detection unit detecting voltage between a positive terminal and a negative terminal of the secondary battery, a current detection unit detecting magnitude of charge and discharge current of the secondary battery, an abnormal state determination unit determining presence/absence of plural abnormal states at any time, which include at least an overcharge state and an overdischarge state based on detected results by the voltage detection unit as well as an overcurrent charge state and an overcurrent discharge state indicating that charge current and discharge current are excessive respectively based on detected results by the current detection unit and storing determination information indicating a determination result at that time, and a protection processing unit controlling respective operations of the discharge current shut-off circuit and the charge current shut-off circuit based on the determination information.

In the above battery pack, voltage between the positive terminal and the negative terminal of the secondary battery is detected by the voltage detection unit, and magnitude of charge and discharge current of the secondary battery is detected by the current detection unit. In the abnormal state determination unit, presence/absence of plural abnormal states including at least an overcharge state and an overdischarge state based on detected results by the voltage detection unit as well as an overcurrent charge state and an overcurrent discharge state indicating that charge current and discharge current are excessive respectively based on detected results by the current detection unit are determined at any time, and determination information indicating determination results at that time is stored. Accordingly, presence/absence of plural abnormal states including the overcharge state, the overdischarge state, the overcurrent charge state and the overcurrent discharge state are managed independently. In the protection processing unit, respective shut-off/conductive operations of the respective discharge current shut-off circuit and the charge current shut-off circuit are controlled based in the determination information, therefore, appropriate control of respective shut-off circuits according to presence/absence of respective abnormal states can be executed.

According to the battery back of the invention, presence/absence of plural abnormal states including the overcharge state, the overdischarge state, the overcurrent charge state, the overcurrent discharge state are managed independently by the determination information stored in the abnormal state determination unit, therefore, the protection processing unit controlling the discharge current shutdown circuit and the charge current shut-off circuit can positively execute appropriate control according to presence/absence of respective abnormal states based on the determination information. Particularly, since the abnormal state depending on voltage of the secondary battery and the abnormal states depending on charge current and discharge current respectively are managed individually by the determination information, the protection processing unit can control respective shut-off circuits on condition that these abnormal states are recognized. Therefore, protection operation having higher safety can be realized.

### Brief description of the Drawings

Fig. 1 is a diagram showing the whole configuration of a battery pack according to a first embodiment of the invention.
Fig. 2 is a diagram showing an internal configuration of a battery protection circuit.
Fig. 3 is a view showing transitions of control states of charge/discharge operations by a microcontroller.
Fig. 4 is a diagram showing a configuration of an abnormality determination flag.
Fig. 5 is a diagram showing correspondence between values of the abnormality flag and control states.
Fig. 6 is a diagram showing a configuration of a battery pack according to a second embodiment of the invention.
Fig. 7 is a diagram showing abnormality determination flags corresponding to respective battery cells.
Fig. 8 is a chart showing transition conditions of control states according to abnormal states of respective battery cells.
Fig. 9 is a view showing transition examples of control states according to a conventional battery pack.

### Best Mode for Carrying Out the Invention

Hereinafter, embodiments of the invention will be explained in detail with reference to the drawings.

Fig. 1 is a diagram showing the whole configuration of a battery pack according to a first embodiment of the invention.

A battery pack 1 shown in Fig. 1 houses a battery cell 2 including a secondary battery and a battery protection circuit 3 which realizes a protection function with respect to abnormal states of the battery cell 2 in one package. A positive terminal 21 and a negative terminal 22 of the battery cell 2 are respectively connected to a cell-side positive terminal 31 and a cell-side negative terminal 32 of the battery protection circuit 3 by, for example, welding. An external positive terminal 33 and an external negative terminal 34 of the battery protection circuit 3 are power supply terminals supplying power to an apparatus to be a discharge load such as a digital camera, as well as terminals for receiving power supply from an external charger.

A control terminal 35 for performing communication with the apparatus to be the discharge load is also provided at the battery protection circuit 3. A present operation state and the like of the battery protection function for verifying abnormality can be outputted through the control terminal 35.

The battery protection circuit 3 has not only the protection function of the battery cell 2 but also a processing function for displaying a remaining amount of the battery cell 2. For example, as the processing function, a function of calculating an integrated value of current, the number of times of charging of the battery cell 2 is included. It is possible that the calculated results are transmitted to the apparatus through the control terminal 35, and that the remaining amount of the battery cell 2 is calculated accurately based on the received information at the side of the apparatus.

As the battery cell 2, for example, a secondary battery of a lithium-ion type and the like can be used. It becomes possible to detect remaining capacity of the battery with high accuracy at the side of the apparatus and to display the battery remaining amount, for example, as available remaining time by using the secondary battery having a discharge characteristic in which discharge voltage decreases relatively slowly as well as linearly such as the lithium-ion secondary battery.

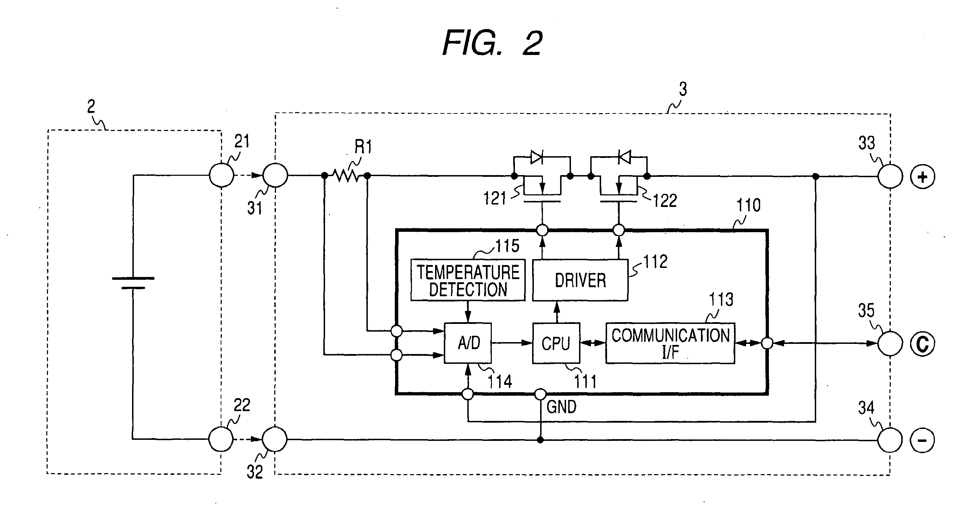

Fig. 2 is a diagram showing an internal configuration of a battery protection circuit.

As shown in Fig. 2, the battery protection circuit 3 includes a microcontroller 110, a FET for charge control 121 and a FET for discharge control 122 (hereinafter, referred to as the charge FET 121 and the discharge FET 122) and a resistance R1 for current detection. The microcontroller 110 includes a CPU (Central Processing Unit) 111, a driver 112, a communication interface circuit 113, an A/D converting circuit 114 and a temperature detection circuit 115.

The CPU 111 performs various calculation and control for realizing the protection function of the battery cell 2 and the processing function for calculating the battery remaining amount by executing programs stored in a not-shown nonvolatile memory. The driver 112 outputs gate voltage of the charge FET 121 and the discharge FET 122 under control by the CPU 111 to drive respective FETs. The communication interface circuit 113 is an interface performing, for example, a serial communication, which is connected to an external apparatus through the control terminal 35 to enable communication between the apparatus and the CPU 111 in accordance with a prescribed format.

The A/D converting circuit 114 detects voltage at both ends of the resistance R1 inserted between the cell-side positive terminal 31 and the charge FET 121, and voltage at the external positive terminal 33 to convert them into digital signals to be supplied to the CPU 111. The A/D converting circuit 114 also converts detected values by the temperature detection circuit 115 into digital signals to be supplied to the CPU 111. The temperature detection circuit 115 detects temperature of the battery cell 2. As the temperature detection circuit 115, for example, a circuit in which a diode and a resistance are connected in series is provided, and a method of detecting temperature based on variations of voltage of the resistance according to the temperature characteristic of the diode can be applied.

The charge FET 121 and the discharge FET 122, each include a MOSFET (Metal Oxide Semiconductor FET) in which a diode is built between a source and a drain equivalently, which function as protection switches at the time of charging or discharging the battery cell 2 respectively under control of the microcontroller 110. Specifically, it is possible that the charge FET 121 selectively shuts down charge current to the battery cell 2 and performs charging to the battery cell 2 from the charger at the time of conduction. The discharge FET 122 selectively can shut off discharge current of the battery cell 2 and discharge and can discharge of the battery cell 2 at the time of conduction, which enables power supply to the apparatus.

In the battery protection circuit 3, the CPU 11 of the microcontroller 110 stores an "abnormality determination flag" for managing abnormal states of the battery cell 2 in a not-shown memory. The CPU 111 updates the abnormality determination flag based on voltage at both ends of the battery cell 2 (hereinafter, referred to as a cell voltage), charge current and discharge current of the battery cell 2 based on the voltage of both ends of the resistance R1, detection information of charger start based on the voltage detected value at the external positive terminal 33 and information of temperature and the like detected by the temperature detection circuit 115, performing protection operation of the battery cell 2 by controlling operations of the charge FET 121 and the discharge FET 122 based on the abnormality determination flag. Also, information of abnormality detection based on the abnormality determination flag can be outputted to the side of the external apparatus through the control terminal 35. It is also possible that the CPU 111 performs calculation such as integration of charge/discharge current and temperature compensation for the integrated values, and outputs the calculated results to the side of the external apparatus through the control terminal 35.

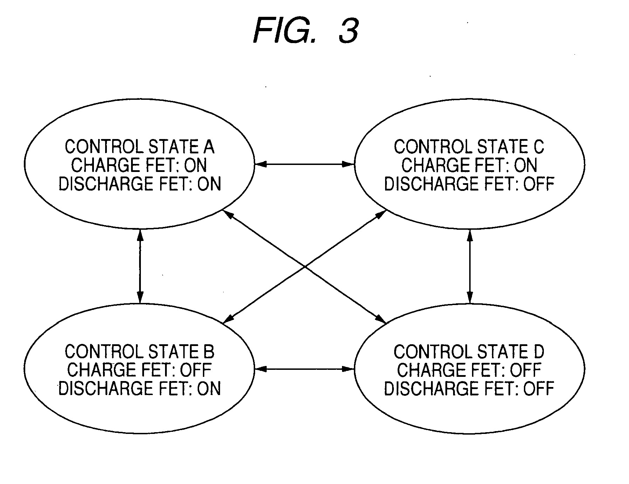

Next, operation of the battery protection function in the battery protection circuit 3 will be explained in detail. First, Fig. 3 is a view showing transitions of control states of charge/discharge operations by a microcontroller.

The CPU 111 of the microcontroller 110 employs four control states which can be changed to one another as shown in Fig. 3, when controlling charging/discharging operations for the battery protection. In the control state A, both the charge FET 121 and the discharge FET 122 are turned on to enable both charging and discharging of the battery cell 2. In the control state B, the charge FET 121 is turned off and the discharge FET is turned on to enable only discharging to be possible. In the control state C, the charge FET 121 is turned on and the discharge FET 122 is turned off to enable only charging to be possible. In the control state D, both the charge FET and the discharge FET are turned off to disable both charging and discharging.

Accordingly, the CPU 111 changes the state to four control states in which drive states of the charge FET 121 and the discharge FET 122 are different, and performs appropriate battery protection operation in accordance with abnormal states determined by the abnormality determination flag by determining that the state should be changed to which control state according to a value of the abnormality determination flag which will be explained below.

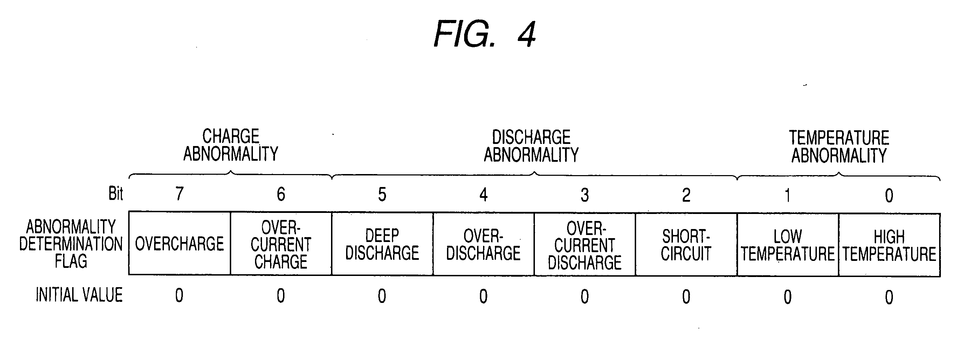

Fig. 4 is a diagram showing a configuration of the abnormality determination flag.

The abnormality determination flag used in the embodiment includes 8-bit flag as shown in Fig. 4, and different types of abnormal states are defined in each bit, and information of presence/absence of respective abnormality occurrence can be stored individually. The CPU 111 determines and set a value in each bit of the abnormality determination flag by the following conditions at any time based on various detection information inputted through the A/D conversion circuit 114. The numerical conditions such as voltage, current, temperature and the like shown as follows are absolutely examples and can be appropriately changed according to the specification of the battery cell.

["0" bit] The bit indicates whether the battery cell 2 is in a state of abnormally high temperature or not. The CPU 111 sets "1" in the "0" bit when the temperature becomes 60 degrees or more and sets "0" when the temperature becomes 55 degrees or less after that based on detection information from the temperature detection circuit 115.

[First bit] The bit indicates whether the battery cell 2 is in a state of abnormally low temperature or not. The CPU 111 sets "1" in the first-bit when the temperature becomes -50 degrees or less and sets "0" when the temperature becomes -45 degrees or more after that based on detection information from the temperature detection circuit 115.

[Second bit] The bit indicates whether drastically large discharge current flowed or not by short-circuit of the power supply terminal of the battery pack 1 to outside, that is, the external positive terminal 33 and the external negative terminal 34 of the battery protection circuit 3. The CPU 111 sets "1" in the second bit when discharge current detected based on the voltage of both ends of the resistance R1 becomes 10A or more, and sets "0" when determining that charging from the charger is started after that. The determination conditions of charging start will be described later.

[Third bit] The bit indicates whether discharge current of the battery cell 2 in is an excessive "overcurrent discharge state" or not. The CPU 111 sets "1" in the third bit when the discharge current becomes 3A or more, and sets "0" when determining that charging from the charger is started.

[Fourth bit] The bit indicates whether cell voltage is in an "overdischarge state" to a degree that power supply to outside is not possible or not. The CPU 111 sets "1" in the fourth bit when the cell voltage becomes 2.5V or less, and sets "0" when the cell voltage becomes 2.52V or more.

[Fifth bit] The bit indicates whether cell voltage is in a further lower "deep discharge state" or not. The CPU 111 sets "1" in the fifth bit when the cell voltage becomes 2.0V or less, and sets "0" when the cell voltage becomes 2.52V or more after that. Since operation of the microcontroller 110 is not possible because the cell voltage is low in the deep discharge state, the microcontroller 110 is actually shut down when the bit "5" is on.

[Sixth bit] The bit indicates whether charge current of the battery cell 2 is in an excessive "overcurrent charge state" or not. The CPU 111 sets "1" in the sixth bit when charge current becomes 3A or more, and sets "0" when determining that discharge is started by a discharge load being connected after that. The discharge start is detected when discharge current becomes 150mA or more which is calculated based on the voltage at both sides of the resistance R1.

[Seventh bit] The bit indicates whether cell voltage is in an "overcharge state" in which the cell voltage is too high and dangerous. The CPU 111 sets "1" in the seventh bit when the cell voltage becomes 4.2V or more, and sets "0" when the cell voltage becomes 4.1 V or less after that.

As described above, in the abnormality determination flag, presence/absence of abnormal states concerning temperature are stored by the "0" bit and the first bit, presence/absence of abnormal states concerning discharging are stored by the second bit to the fifth bit, and presence/absence of abnormal states concerning charging are stored by the sixth bit and the seventh bit. As for the abnormal states concerning discharging and charging, respective presence/absence of abnormal states caused by voltage and presence/absence of abnormal states caused by current are stored individually. Therefore, the type of abnormality occurring at present can be identified meticulously and accurately, and also in the case that different types of abnormalities occur, types can be identified easily. Accordingly, only by referring the abnormality determination flag, the optimum protection operation control according to the identified results can be executed.

In the determination in the second bit and the third bit, the charge start is detected when at least one of the following two conditions is satisfied. The first condition is a case in which voltage of the external positive terminal 33 becomes 3.0 or more. The second condition is a case in which charge current detected based on the voltage of both ends of the resistance R1 becomes 150mA or more.

Here, in related arts, the charge start was determined only based on the voltage of the external positive terminal 33. However, in the case that the discharge FET 122 is on and the cell voltage decreases, when the charger is connected to the battery pack 1, the voltage of the charger sometimes decreases involved by the cell voltage. In such case, it is sometimes incapable of detecting the charge start. In the embodiment, the charge start can be detected based on not only the voltage of the external positive terminal 33 but also a detected value of charge current. Since charge current flows even when the voltage of the charger decreases as described above, the charge start can be detected more positively by detecting the charge current. Therefore, in the overcurrent discharge state or in the case in which the power supply terminal of the battery pack 1 is short circuited, operation can be returned positively when charging is started.

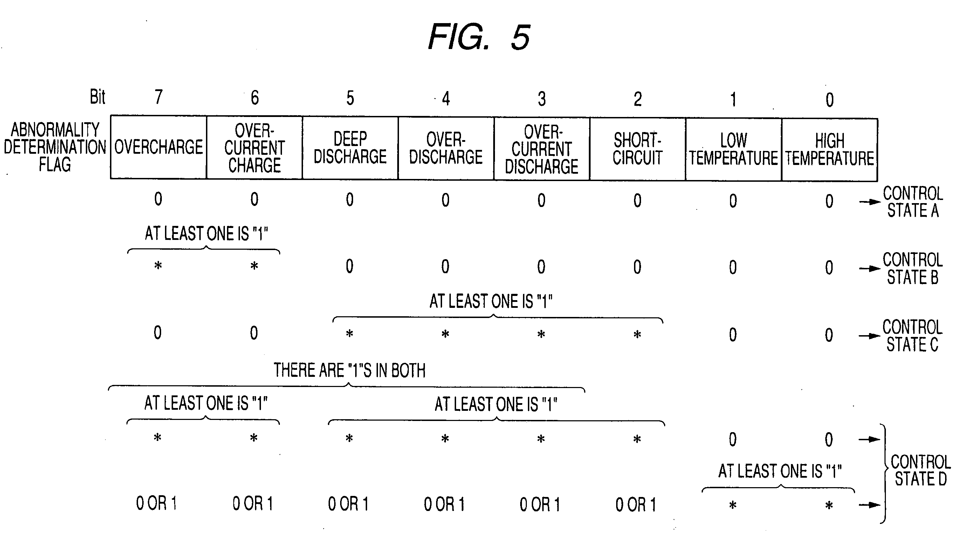

Next, transition conditions of control states according to the abnormality determination flag will be explained. Fig. 5 is a diagram showing correspondence between values of the abnormality determination flag and control states.

First, when all bits of the abnormal determination flag are "0", the CPU 111 makes a transition to the control state A, turning on both the charge FET 121 and the discharge FET 122. That is, since no abnormality is detected at this time, the battery cell 2 is allowed to be in a state in which both charging and discharging are possible.

When the "0" bit to the fifth bit are all "0" and at least one of the sixth bit and the seventh bit is "1", the CPU 111 makes a transition to the control state B and turns on only the discharge FET 122. That is, since the charge voltage is excessive or excessive charge current flows at the time, the battery cell 2 is allowed to be a state in which charging is not possible.

When all bits of the "0" bit, the first bit, the sixth bit and the seventh bit are "0" and at least one of the second bit to the fifth bit is "1", the CPU 111 makes a transition to a control state C and turns on only the charge FET 121. That is, since some abnormality is detected with respect to the discharge state at the time, the battery cell 2 is allowed to be in a state in which discharge is not possible, namely, in which power supply to the apparatus is not possible.

When at least one of the second bit to the fifth bit is "1" and at least one of the sixth bit and the seventh bit is "1", the CPU 111 makes a transition of the control state D and both the charge FET 121 and the discharge FET 122 are turned off. That is, abnormalities are detected at both of the charge state and the discharge state at the time and it is conceivable that the normal operation is not possible, therefore, the battery cell 2 is allowed in a state in which neither charging nor discharging are possible.

In the case that at least one of the "0" bit and the first bit is "1", the CPU 111 makes a transition to the control state D and turns off both the charge FET 121 and the discharge FET 122 regardless of values in the second bit to the seventh bit. That is, it is determined that the battery cell 2 is in a dangerous state because it becomes high in temperature, or in a state in which the normal operation is not possible such that the cell voltage decreases due to low temperature, therefore, the battery cell 2 is forcibly allowed to be in the unavailable state regardless of charging and discharging states.

As described above, the optimum protection operation control according to the occurrence situation of abnormal states can be executed at any time by associating values of the abnormality determination flag and the control states. Particularly, an appropriate transition destination according to identified results can be determined by simple processing while various types of abnormal states can be identified. Furthermore, when any type of abnormal state is returned to the normal state, it is possible that the state makes a transition to the appropriate control state at any time.

For example, in the abnormal state concerning charging, only the overcharge state based on the detected value of charge voltage was determined in the related arts, however, in the embodiment, it is also possible to determine overcurrent charge state based on the detected value of charge current in addition to the overcharge state. The return from the overcurrent charge state should be performed by the detection of discharge based on charge current, which is different from the overcharge state, however, the appropriate return operation can be executed only by updating the abnormality determination flag, applying such right return condition. In addition, not only abnormal states based on detected values of voltage and current but also abnormal states based on the detected value of temperature can be determined.

Even when the detection types of abnormal states increase as described above, the transition destination of the control state can be determined and the appropriate protection operation can be executed at any time only by providing bits corresponding to the detection types in the abnormality determination flag and by prescribing correspondence between combination in the flag and control states. Even when plural types of abnormalities are detected in any combination, the control state to be changed can be determined, therefore, accurate response is possible with respect to various abnormal states as well as returning operation from the state can be appropriately executed. As a result, secure protection operation can be executed at any time, which increases safety.

Since various types of abnormal states at present are usually stored in the abnormality determination flag, the current abnormal state can be immediately known by the abnormality determination flag being allowed to be read out from outside through the control terminal 35, as a result, failure analysis can be executed efficiently. For example, when some change of operation occurs such that charging operation or discharge operation stops in an inspection before shipment, an inspector can analyze the cause of occurrence of abnormality immediately and accurately, which was occurred in the battery pack 1 by reading out the abnormality determination flag. Even when histories of abnormality occurrence are not stored, it is possible to find which kind of abnormality occurrence caused the change of operation, therefore, the merits such as reduction of a memory region in the battery protection circuit 3 and increase of processing efficiency can be obtained in addition to the increase of failure analysis efficiency.

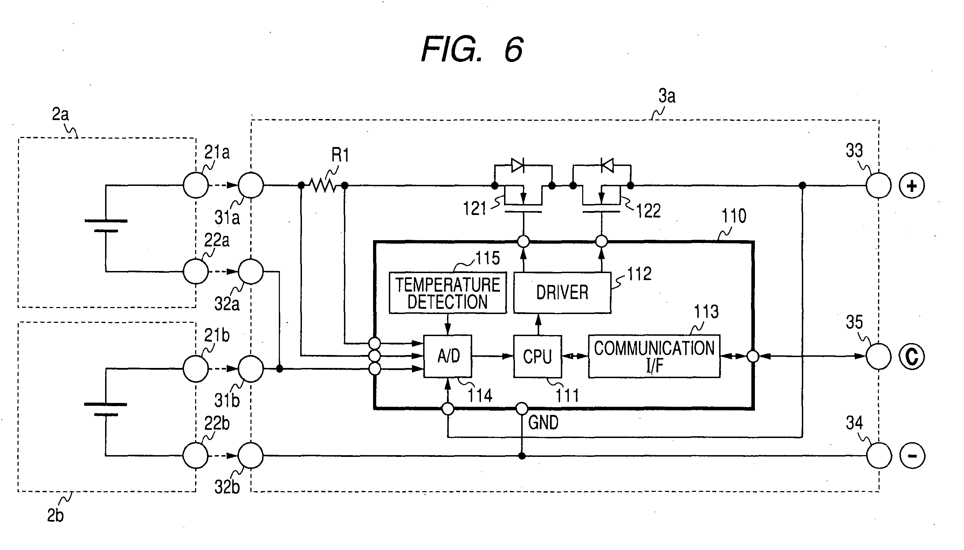

Next, Fig. 6 is a diagram showing a configuration of a battery pack according to a second embodiment of the invention. In Fig. 6, functions corresponding to ones in Fig. 2 are shown by putting the same numerals and signs, and explanations thereof will be omitted.

The battery pack shown in Fig. 6 includes two battery cells, namely, a battery cell 2a and a battery cell 2b. A negative terminal 22a of the battery cell 2a and a positive terminal 21b of the battery cell 2b are connected through a cell-side negative terminal 32a and a cell-side positive terminal 31b of a battery protection circuit 3a, accordingly, the battery cell 2a and the battery cell 2b are connected in series. In addition, a cell-side positive terminal 31a and a cell-side negative terminal 32b of the battery protection circuit 3a are connected to a positive terminal 21a of the battery cell 2a and a negative terminal 22b of the battery cell 2b, respectively.

The CPU 111 of the battery protection circuit 3a is capable of detecting voltage between the cell-side positive terminal 31a and the cell-side negative terminal 32b, namely, voltage between two battery cells 2a and 2b connected in series, charging and discharging current through the A/D converting circuit 114. In addition, the cell-side negative terminal 32a and the cell-side positive terminal 31b are also connected to the A/D converting circuit 114, accordingly, respective voltages of the battery cells 2a and 2b can be detected. The CPU 111 sets abnormality determination flags for the respective battery cells 2a and 2b according to the voltages, currents and temperatures of the respective battery cells 2a and 2b, which are detected by the temperature detection circuit 115.

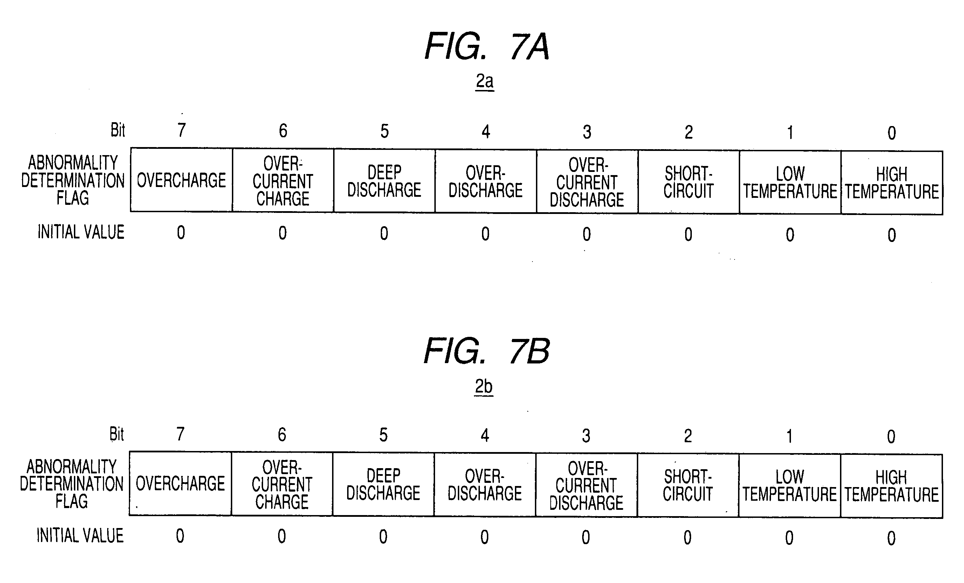

Fig. 7 is a diagram showing abnormality determination flags corresponding to respective two battery cells.

As shown in Fig. 7, types of abnormal states stored in the abnormality determination flag corresponding to each of two battery cells 2a and 2b are the same as the first embodiment using one battery cell. The setting conditions of values concerning each bit are also the same. It should be noted that the abnormal state concerning temperature is determined based on detected values of temperature in respective battery cells 2a and 2b, and the overdischarge state, the deep discharge state and the overcharge state are determined based on detected values of voltage in respective battery cells 2a and 2b.

The CPU 111 provisionally determines that the respective battery cells 2a and 2b should make a transition to which control states A to D base on respective abnormality determination flags. Then, as explained in Fig. 8, the conclusive transition destination is determined according to combination of control states provisionally determined concerning respective cells and operations of the charge FET 121 and the discharge FET are controlled.

Fig. 8 is a chart showing transition conditions of control states according to abnormal states of respective battery cells.

As shown in Fig. 8, when control states provisionally determined by the abnormality determination flags corresponding to the battery cells 2a and 2b respectively are the same, the CPU 111 makes a transition to that control state. In the case that abnormality is not detected from one of the abnormality determination flag and the transition destination is provisionally determined to be the control state A, when some abnormality is detected by the other abnormality determination flag, the CPU makes a transition to the control state based on the other abnormality determination flag.

When some abnormality is detected by both abnormality determination flags and control states provisionally determined by respective abnormality determination flags are different from each other, the state is allowed to be changed to the control state D. That is, abnormality concerning charging occurs at one side of the battery cells 2a and 2b and abnormality concerning discharging occurs at the other side in this case, therefore, the safety of respective battery cells 2a and 2b can be secured by stopping both charging and discharging. In the case that, for example, abnormality in one battery cell is cancelled earlier, the state is allowed to be changed to the control state corresponding to the other abnormality. Accordingly, even when different types of abnormalities occur at respective battery cells, or when these abnormalities are cancelled, appropriate protection operation can be positively executed at any time.

Furthermore, in the case that not only two battery cells such as in the second embodiment but also further more battery cells are connected in series, abnormality determination flags corresponding to respective battery cells are set, and the conclusive control state is determined according to combination of control states provisionally determined based on the flags, thereby executing appropriate protection operation at any time. That is, when abnormalities are detected from plural abnormality determination flags, if control states provisionally determined from these flags are the same, the state is changed to that control state, and if control states provisionally determined are different, the state is changed to the control state D. Also in the case that at least one of the control states provisionally determined is the control state D, the state is changed to the control state D. Furthermore, in the case that plural battery cells are connected in parallel, appropriate protection operation can be executed by the same processing. Accordingly, the method of providing abnormality determination flags corresponding to respective battery cells and determining the control state based on these abnormality determination flags can be applied to the protection operation for various forms of battery packs without changing a basic control procedure.

## Claims

1. A battery pack in which a processing circuit executing protection processing for abnormality occurrence of a secondary battery is housed with the secondary battery, comprising:
a discharge current shut-off circuit selectively shutting off discharge current of the secondary battery;
a charge current shut-off circuit selectively shutting off charge current of the secondary battery;
a voltage detection unit detecting voltage between a positive terminal and a negative terminal of the secondary battery;
a current detection unit detecting magnitude of charge and discharge current of the secondary battery;
an abnormal state determination unit determining presence/absence of plural abnormal states at any time, which include at least an overcharge state and an overdischarge state based on detected results by the voltage detection unit as well as an overcurrent charge state and an overcurrent discharge state indicating that charge current and discharge current are excessive respectively based on detected results by the current detection unit, and storing determination information indicating a determination result at that time; and
a protection processing unit controlling respective operations of the discharge current shut-off circuit and the charge current shut-off circuit based on the determination information.

2. The battery pack according to claim 1,
wherein the protection processing circuit includes four control states according to combinations of shut-off/conductive states of the respective discharge current shut-off circuit and the charge current shut-off circuit.

3. The battery pack according to claim 1,
wherein the abnormal state determination unit stores respective determination results of presence/absence of plural abnormal states as a flag, and
wherein the protection processing unit controls respective operations of the discharge current shut-off circuit and the charge current shut-off circuit according to combination of values in the flag.

4. The battery pack according to claim 1,
wherein the protection processing unit allows only charge current shut-off circuit to be shut off when determined that the state is the overcharge state or the overcurrent charge state as well as determined that the state is neighter the overdischarge state nor the overcurrent discharge state, and allows only the discharge current shut-off circuit to be shut off when determined that the state is the overdishcarge state or the overcurrent discharge state as well as determined that the state is neigher the overcharge state nor the overcurrent charge state based on the determination information.

5. The battery pack according to claim 4,
wherein the protection processing unit allows both the discharge current shut-off circuit and the charge current shut-off circuit to be shut off when determined that the state is the overcharge state or the overcurrent charge state as well as determined that the state is also the overdischarge state or the overcurrent discharge state based on the determination information.

6. The battery pack according to claim 1, further comprising:
a charge detection means for detecting the charge start based on voltage between charge terminals for connecting to an external charger, and
wherein the abnormal state determination unit, after determining that the state is the overcurrent discharge state and updating the determination information, determines that the overcorrent discharge state is cancelled and updates the determination information when the charge start is detected by the charge detection means or when charge current of more than a prescribed value is detected by the current detection unit.

7. The battery pack according to claim 1,
wherein the abnormal state determination unit, when charge current which is more than a first reference value is detected by the current detection unit, determines that the state is the overcurrent charge state and updates the determination information, then, when discharge current which is more than a second reference value is detected, determined that the overcurrent charge state is cancelled and updates the determination information.

8. The battery pack according to claim 1, further comprising:
a temperature detection unit detecting temperature inside the secondary battery, and
wherein the abnormal state determination unit determines an abnormal high temperature state and an abnormal low temperature state respectively indicating that the state is abnormally high in temperature and abnormally low in temperature based on detection results by the temperature detection unit, and storing determination results by the determination information, and
wherein the protection processing unit allows both the discharge current shut-off circuit and the charge current shut-off circuit to be shut off when determined that the state is the abnormally high temperature state or the abnormally low temperature state based on the determination information, regardless of other determination results in the determination information.

9. The battery pack according to claim 1, further comprising:
a charge detection unit detecting whether charging to the secondary battery is started or not, and
wherein the abnormal state determination unit determines that the state is the overcurrent discharge state when discharge current detected by the current detection unit is smaller than a first reference value as well as determines that the state is a short-circuit state in which the positive terminal and the negative terminal of the secondary circuit are short circuited when the discharge current is smaller than a second discharge current which is lower than the first reverence value, and manages presence/absence of the short-circuit state in addition to the overcurrent discharge state in the determination information, then, after determining as the short-circuit state, when charge start is detected by the charge detection unit, the abnormal state determination unit determines that the short-circuit state is cancelled and updates the determination information.

10. The battery pack according to claim 1,
wherein plural secondary batteries are included in the same battery pack,
wherein the voltage detection unit detects voltage between the positive terminal and the negative terminal at each secondary battery,
wherein the abnormal state determination unit stores determination results of the abnormal states of each secondary battery as individual determination information,
wherein the protection processing unit controls respective operations of the discharge current shut-off circuit and the charge current shut-off circuit according to combinations of determination results of the abnormal states in respective determination information.

11. The battery pack according to claim 10,
wherein the protection processing unit, when it is indicated that there is an abnormality in one determination information and it is indicated that there is not an abnormality in other determination information, controls respective operations of the discharge current shut-off circuit and the charge current shut-off circuit based on the determination information determined that there is the abnormality.

12. The battery pack according to claim 10,
wherein the protection processing unit, when it is indicated that the state is the overcharge state or the overcurrent charge state in one determination information and it is indicated that the state is the overdischarge state or overcurrent discharge state in other determination information, allows both the discharge current shut-off circuit and the charge current shut-off circuit to be shut off.

13. The battery pack according to claim 10,
wherein the protection processing unit includes four control states according to respective combinations of shut-off/conductive states of the discharge current shut-off circuit and the charge current shut-off circuit, and after determining transition destinations of the control states provisionally based on respective determination information, determines a conclusive transition destination according to combinations of the control states which were provisionally determined.

14. The battery pack according to claim 13,
wherein the protection processing unit, when all control states which were provisionally determined based on respective determination information are the same, determines the conclusive transition destination as that control state,
when at least one of the control states which were provisionally determined makes at least one of the discharge current shut-off circuit and the charge current shut-off circuit be a shut-off state and remaining control states except that control state make both the discharge current shut-off circuit and the charge current shut-off circuit be a conductive state, determines the conclusive transition destination as the control state including the shut-off state, and
when at least one of the control states which were provisionally determined makes one of the discharge current shut-off circuit and the charge current shut-off circuit be the shut-off state and at least one of the remaining control states makes the other of the discharge current shut-off circuit and the charge current shut-off circuit be the shut-off state, as well as at least one of the control states which were provisionally determined makes both the discharge current shut-off circuit and the charge current shut-off circuit be the shut-off state, determined the conclusive transition destination as the control state which makes both the discharge current shut-off circuit and the charge current shut-off circuit be the shut-off state.

15. A battery protection method for protecting a secondary battery when abnormality occurs, comprising the steps of:
determining presence/absence of plural abnormal states by an abnormal state determination unit, which includes at least an overcharge state and an overdischarge state based on detected results of voltage between a positive terminal and a negative terminal of the secondary battery by a voltage detection unit as well as an overcurrent charge state and an overcurrent discharge state indicating that charge current and discharge current are excessive respectively based on detected results of charge and discharge current of the secondary battery by a current detection unit and storing determination information indicating determination results at that time; and
controlling respective operations of a discharge current shut-off circuit selectively shutting off discharge current of the secondary battery and a charge current shut-off circuit selectively shutting off charge current of the secondary battery by a protection processing unit based on the determination information.
